# EUROPÄISCHE PATENTSCHRIFT

(11) **EP 3 166 451 B1**
(45) Veröffentlichungstag und Bekanntmachung des Hinweises auf die Patenterteilung: **25.07.2018**
(21) Anmeldenummer: 15728470.4
(22) Anmeldetag: 03.06.2015
(51) Int. Cl.: A47J 31/36

(54) **VORRICHTUNG UND VERFAHREN ZUR ZUBEREITUNG EINES BRÜHGETRÄNKS**
APPARATUS AND METHOD FOR PREPARING A BREWED BEVERAGE
DISPOSITIF ET PROCÉDÉ DE PRÉPARATION D'UNE BOISSON INFUSÉE

(30) Priorität: 11.07.2014 DE 102014109760
(43) Veröffentlichungstag der Anmeldung: 17.05.2017
(60) Teilanmeldung: 18170003.0
(73) Patentinhaber: Melitta Single Portions GmbH & Co. KG, 32425 Minden (DE)
(72) Erfinder: HESSELBROCK, Katrin, 49086 Osnabrück (DE); NEUHAUS, Sven, 32549 Bad Oeynhausen (DE); PAHNKE, Jan, 32427 Minden (DE); SCHANDL, Gerold, 32425 Minden (DE); KÖHLER, Robert, 64372 Ober-Ramstadt (DE); UNGERER, Markus, 64367 Mühltal (DE); WEBER, Thomas, 64367 Mühltal (DE)
(74) Vertreter: Dantz, Jan Henning
(86) Internationale Anmeldenummer: PCT/EP2015/062360
(87) Internationale Veröffentlichungsnummer: WO 2016/005111

(56) Entgegenhaltungen:
- EP-A1- 2 112 093
- EP-A1- 2 112 093
- EP-A1- 2 159 167
- EP-A1- 2 159 167
- DE-A1-102009 048 233

## Beschreibung

Die vorliegende Erfindung betrifft eine Vorrichtung zur Zubereitung eines Brühgetränks mit einer Einrichtung zum Erhitzen und Fördern von Wasser, einer Brühkammer, in die das erhitzte Wasser eingeleitet wird, einer Positioniereinrichtung zum Positionieren einer Kapsel mit einem Inhaltsstoff zum Brühen eines Getränks an einer seitlichen Öffnung der Brühkammer und einem Auslass mit einem schaltbaren Ventil an einer Unterseite der Brühkammer, sowie ein Verfahren zur Zubereitung eines Brühgetränks.

Die EP 2 119 385 offenbart eine Brüheinheit zum Aufbrühen einer Kapsel, bei der über einen Verschlussmechanismus eine Kapsel an Halteelementen fixiert wird. Beim Brühvorgang wird die Kapsel aufgestochen und dann unter Druck gebrüht. Solche Brüheinheiten eignen sich nicht zur Herstellung von Tee, da die Brüheinheit mit hohem Druck arbeitet und keine Ziehzeit vorgesehen ist.

In der EP 2 159 167 ist daher eine Vorrichtung zur Herstellung eines Brühgetränkes offenbart worden, bei der die Kapsel benachbart zu einer Brühkammer angeordnet wird, in der das aufgebrühte Getränk eine gewisse Ziehzeit verweilen kann. Für den Brühvorgang wird die Kapsel an der Rückseite aufgestochen, und dann wird über eine Nadel Flüssigkeit in die Kapsel injiziert, die dann durch ein Sieb an einer Seite der Kapsel in die Brühkammer strömen kann. Diese Brühvorrichtung kann weitgehend drucklos arbeiten und auch zur Herstellung von Tee eingesetzt werden. Allerdings ist nachteilig, dass durch das Aufstechen der Kapsel diese beschädigt wird und bei einem gewissen Füllstand Leckageströme auftreten können. Zudem kann an der in die Kapsel ragenden Spitze Tee anhaften bleiben, der die Brühkammer und ggfs. das Brühgetränk für den nächsten Brühvorgang verunreinigt.

Es ist daher Aufgabe der vorliegenden Erfindung, eine Vorrichtung und ein Verfahren zur Zubereitung eines Brühgetränks zu schaffen, die eine optimierte Wasserführung besitzen und die obigen Nachteile vermeiden.

Diese Aufgabe wird mit einer Vorrichtung mit den Merkmalen des Anspruches 1 sowie einem Verfahren mit den Merkmalen des Anspruches 10 gelöst.

Bei der erfindungsgemäßen Vorrichtung ist eine Positioniereinrichtung vorgesehen, um eine Kapsel mit einem Inhaltsstoff zum Brühen des Getränks an einer seitlichen Öffnung an einer der Kapsel nebengeordneten Brühkammer zu positionieren, die oberhalb eines Auslasses, aber unterhalb eines Einlasses an einer Oberseite der Brühkammer angeordnet ist. Über den Einlass an der Oberseite der Brühkammer kann heißes Wasser eingeleitet werden, so dass die Kapsel ohne Beschädigung für den Brühvorgang eingesetzt werden kann. Dies vermeidet mögliche Beschädigungen oder Leckageströme. Durch die seitliche Positionierung der Kapsel an der Brühkammer und die Zuleitung des heißen Wassers an einem oberen Einlass kann zudem das Brühvolumen variiert werden, da der Befüllungsgrad der Brühkammer nicht durch den Einlass begrenzt wird. Dabei wird auch die Handhabung vereinfacht, da die Kapsel durch einen Einwurfschacht nach unten Fallen kann, um über mechanische Positionierungsmittel seitlich an der Brühkammer positioniert zu werden. Nach dem Brühvorgang kann die gebrauchte Kapsel dann weiter nach unten fallen und entsorgt werden. Ferner lässt sich die Brühkammer besser spülen und reinigen.
Gemäß einer bevorzugten Ausgestaltung der Erfindung ist das Volumen der Brühkammer mindestens doppelt so groß wie das Volumen der Kapsel, insbesondere mindestens viermal so groß. Das Volumen der Kapsel kann beispielsweise in einem Bereich zwischen 20ml und 100ml liegen. Das Volumen der Brühkammer ohne Kapsel liegt in einem Bereich zwischen 0,1l bis 1l, vorzugsweise 0,15l bis 0,7l. Dadurch kann in der Brühkammer besonders gut Tee zubereitet werden, der eine gewisse Zeit in der Brühkammer ziehen muss. Das Volumen der Kapsel ist dabei vorzugsweise so bemessen, dass es mindestens doppelt so groß ist wie das Volumen des geschnittenen Tees, so dass bei der Zubereitung ausreichend Raum zum Aufquellen des Tees vorhanden ist.
Zwischen der Brühkammer und dem Innenraum der Kapsel ist vorzugsweise ein Sieb angeordnet. Das Sieb kann dabei sowohl an der Kapsel als auch an der Brühkammer vorgesehen sein, wobei die Anordnung an der Kapsel den Vorteil besitzt, dass die Kapsel als Einheit an der Brühkammer positioniert und wieder entsorgt werden kann, was die Reinigung vereinfacht.
An dem Einlass ist in einer vorteilhaften Ausgestaltung eine Düse vorgesehen, die mit einer Spitze in einen Innenraum der Brühkammer hervorsteht. An der Düse können dabei mehrere über den Umfang verteilte Öffnungen vorgesehen sein, so dass einerseits die Zufuhr von heißem Wasser für den Brühvorgang als auch für einen Spülvorgang gewährleistet wird. Zudem kann auch heißes Wasser zum Aufheizen oder Erwärmen der Brühflüssigkeit nachgefüllt werden.

Gemäß einer weiteren Ausgestaltung ist eine Antriebseinrichtung vorgesehen, mittels der die Brühkammer bewegbar ist. Zur Abdichtung einer Schnittstelle zwischen Kapsel und Brühkammer kann dann die Brühkammer verfahren werden, um eine Dichtung bereitzustellen. Zudem ist das Verfahren der Brühkammer von Vorteil, wenn das Verfahren der Brühkammer genutzt werden kann, um eine Kapsel aus der Brühposition nach dem Gebrauch auszuwerfen.

Vorzugsweise ist ein Einfüllstutzen in der Brühposition oberhalb einer Durchführung zum Befüllen des Gefäßes, beispielsweise einer Tasse, angeordnet und in einer Spülposition beabstandet von der Durchführung oberhalb eines Leitelementes zum Sammeln von Spülflüssigkeit. Dann kann das Verfahren der Brühkammer genutzt werden, um in einer Brühposition ein Gefäß zu befüllen, das unterhalb der Durchführung angeordnet ist. Wird nach dem Brühvorgang eine Reinigung der Brühkammer vorgenommen, braucht der Einfüllstutzen lediglich von der Durchführung zu dem Leitelement verfahren werden, damit dann das Spülwasser innerhalb der Vorrichtung über das Leitelement in ein Sammelbecken geleitet werden kann. Dabei wird der von Tee benetzte Bereich der Brühkammer und des Leitelementes vollständig gespült, was besonders hygienisch ist.

Die Vorrichtung weist vorzugsweise ferner einen Sammelbehälter für Abfälle auf. Dabei ist der Sammelbehälter vorzugsweise unterhalb der seitlichen Öffnung der Brühkammer angeordnet, so dass beim Verfahren der Brühkammer nach dem Brühvorgang die Kapsel in den Sammelbehälter herabfallen kann. Ferner kann Spülflüssigkeit, die aus der seitlichen Öffnung der Brühkammer heraustritt, in dem Sammelbehälter abgeleitet werden. An dem Sammelbehälter kann dabei ein Gitter oder ein Sieb vorgesehen sein, um gebrauchte Kapseln oberhalb eines Sammelbeckens für Flüssigkeit zu sammeln.

Bei dem erfindungsgemäßen Verfahren wird zunächst eine Kapsel mit einem Inhaltsstoff zum Brühen eines Getränks an einer seitlichen Öffnung einer Brühkammer positioniert, um dann Wasser zu erhitzen und in die Brühkammer zu fördern. Das erhitzte Wasser wird dann an einer Oberseite der Brühkammer über einen Einlass eingeleitet und das Getränk in der Brühkammer unter Befüllung der Kapsel mit erhitztem Wasser zubereitet. Nach einer Wartezeit, der Brüh- oder Ziehzeit, die beispielsweise mindestens 30 Sekunden, vorzugsweise mindestens 1 Minute betragen kann, wird ein Ventil an einer Unterseite der Brühkammer an einem Auslass geöffnet und ein Gefäß mit dem Brühgetränk befüllt. Bei dem erfindungsgemäßen Verfahren wird somit die Schwerkraft genutzt, um eine drucklose Zubereitung eines Brühgetränkes vornehmen zu können, ohne die Kapsel zu beschädigen, so dass Leckageströme unabhängig vom Füllvolumen der Brühkammer vermieden werden können.

Vorzugsweise wird nach dem Brühvorgang die Brühkammer verfahren, um die Kapsel in einen Sammelbehälter abzuwerfen. Das Verfahren der Brühkammer kann somit einerseits zur Abdichtung der Kapsel und andererseits zum Auswurf der Kapsel genutzt werden. Zudem kann die Brühkammer zusammen mit einem Einfüllstutzen verfahren werden, um den Einfüllstutzen von einer Einfüllposition oberhalb einer Durchführung zu einem Gefäß in eine Spülposition oberhalb eines Leitelementes zu bewegen, um dann die Brühkammer zu spülen.

Bei dem erfindungsgemäßen Verfahren weist die Kapsel vorzugsweise eine Codierung oder Markierung auf, die nach der Positionierung der Kapsel ausgelesen wird. Dann kann eine Steuerung der Vorrichtung die Zubereitungsparameter, wie Brühtemperatur, Ziehzeit und/oder Füllvolumen entsprechend der Markierung steuern.

Vorzugsweise wird bei dem erfindungsgemäßen Verfahren als Brühgetränk Tee zubereitet. Es ist natürlich auch möglich, andere Brühgetränke zuzubereiten, insbesondere Brühgetränke, die eine gewisse Brühzeit benötigen.

Die Erfindung wird nachfolgend anhand eines Ausführungsbeispiels mit Bezug auf die beigefügten Zeichnungen näher erläutert. Es zeigen:

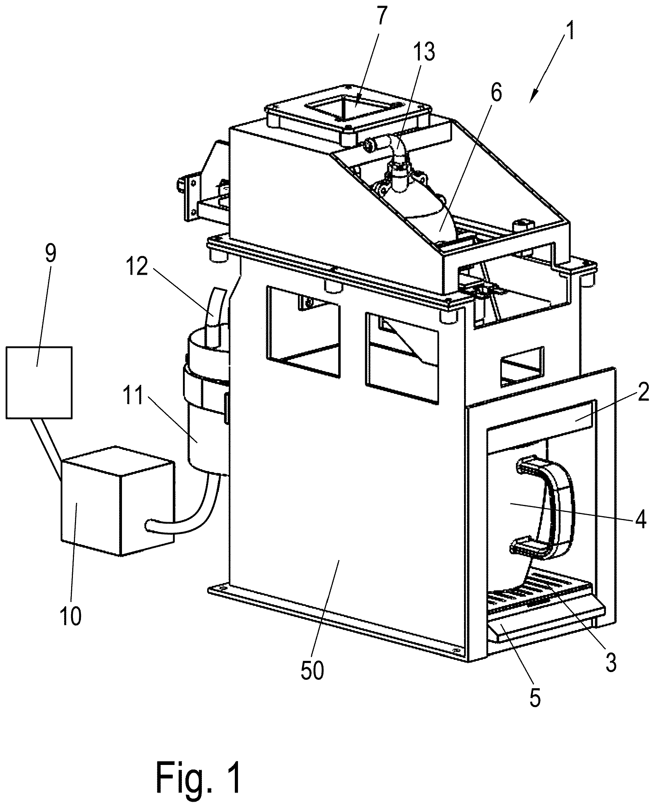

- Figur 1: eine perspektivische Ansicht einer Vorrichtung zur Zubereitung eines Brühgetränks;
- Figur 2: eine perspektivische Ansicht der Vorrichtung der Figur 1 ohne Gehäuse;
- Figur 3: Schnittdarstellung der Vorrichtung der Figur 1 ohne Gehäuse vor dem Einwurf der Kapsel;
- Figur 4: Schnittdarstellung der Vorrichtung der Figur 1 ohne Gehäuse beim Einwurf der Kapsel;
- Figur 5: Schnittdarstellung der Vorrichtung der Figur 1 mit der Kapsel in der Brühposition;
- Figur 6: Schnittdarstellung der Vorrichtung der Figur 1 nach dem Auswurf der Kapsel in einer Spülposition;
- Figur 7: eine perspektivische Detailansicht der Brühkammer der Vorrichtung der Figur 1 mit der Kapsel in der Brühposition;
- Figur 8: eine Aufsicht auf den Einwurfschacht der Vorrichtung der Figur 1;
- Figur 9: eine geschnittene perspektivische Ansicht der Kapsel, und
- Figur 10: eine geschnittene perspektivische Ansicht einer weiteren Ausführungsform der Kapsel.

Eine Vorrichtung 1 zur Zubereitung von Brühgetränken umfasst einen herausnehmbaren Sammelbehälter 2, der in einem Gehäuse 50 angeordnet ist. Der Sammelbehälter 2 besteht vorzugsweise aus zwei Teilen: einem Behälter mit wasserdurchlässigem Boden zum Auffangen von Kapseln und einem darunterliegenden Behälter zum Sammeln von Wasser. An dem Sammelbehälter 2 ist eine Auflage 3 mit Öffnungen zum Abstellen eines Gefäßes 4 angeordnet. Unterhalb der Auflage 3 ist ein Griffabschnitt 5 zum Herausziehen des Sammelbehälters 2 vorgesehen.

Die Vorrichtung 1 zur Zubereitung von Brühgetränken umfasst ferner eine Brühkammer 6, die neben einem Einwurfschacht 7 für Kapseln vorgesehen ist.

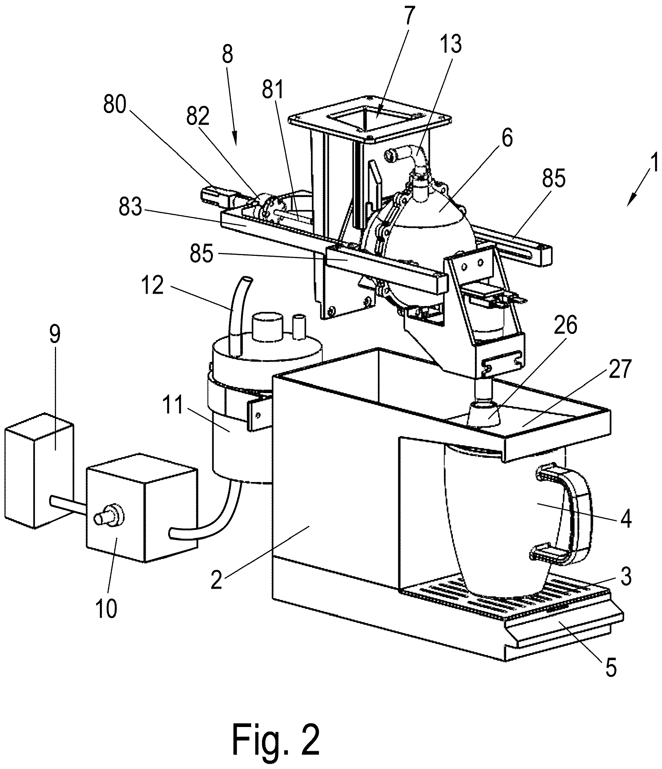

Wie in Figur 2 gezeigt ist, befindet sich der Einwurfschacht 7 für Kapseln zwischen der Brühkammer 6 und einer Antriebseinrichtung 8. Über die Antriebseinrichtung 8 kann die Brühkammer 6 relativ zu dem Einwurfschacht 7 verfahren werden. Hierfür ist ein Elektromotor 80 vorgesehen, der über ein Getriebe eine Spindel 81 antreibt, auf der eine Spindelmutter 82 drehfest gelagert ist. Durch Drehen der Spindel 81 werden mit der Spindelmutter 82 verbundene Arme 83 linear verfahren. Die Arme 83 umgreifen die Brühkammer 6 an gegenüberliegenden Seiten sind an linearen Führungen 85 geführt. Die Führung 85 kann beispielsweise als Nut oder Schiene ausgebildet sein. Die Brühkammer 6 ist dadurch linear bewegbar.

Die Vorrichtung 1 zur Zubereitung von Brühgetränken umfasst ferner einen schematisch dargestellten Tank 9 für Frischwasser, der abnehmbar ausgebildet sein kann. Der Tank 9 ist mit einer Pumpe 10 verbunden, über die eine Heizeinrichtung 11 in Form eines Boilers gespeist wird. Von der Heizeinrichtung 11 führt eine Leitung 12, die in Figur 2 nur teilweise dargestellt ist, zu einer Einlassleitung 13 oberhalb der Brühkammer 6. Zwischen der Einlassleitung 13 und dem Tank 9 kann optional auch ein Filter vorgesehen sein.

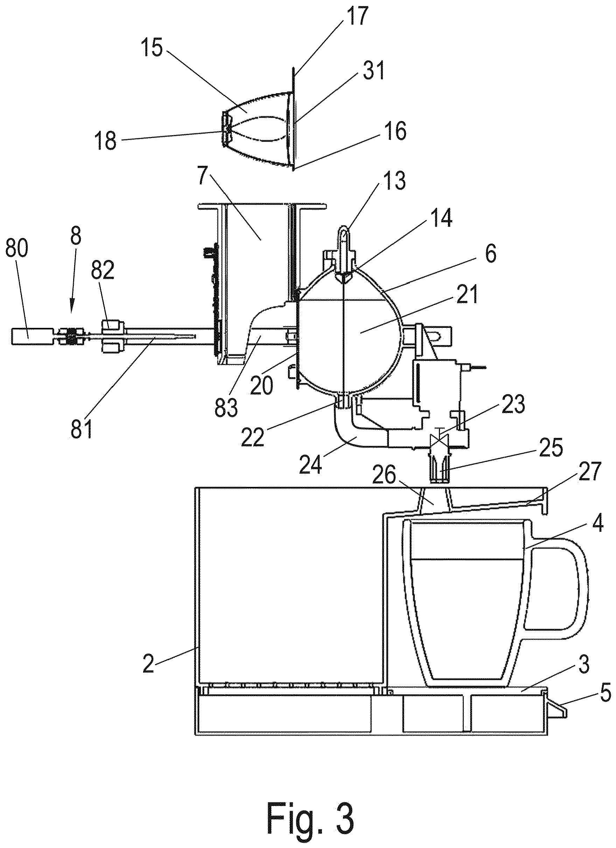

In Figur 3 ist die Vorrichtung 1 im Detail dargestellt. Oberhalb des Einwurfschachtes 7 ist eine Kapsel 15 vorgesehen, die topfförmig ausgebildet ist und an einer Seite eine Öffnung aufweist, die mit einem Sieb 31 verschlossen ist. Das Sieb 31 ist dabei an einem Rand 16 fixiert, der asymmetrisch ausgebildet ist und an einer Seite einen hervorstehenden Abschnitt 17 als Griffbereich aufweist. Durch ebenfalls asymmetrische Führungsmittel am Boden der Kapsel 15 wird diese dadurch in einer vorbestimmten Position und Ausrichtung in den Einwurfschacht 7 eingeworfen, der eine entsprechende Aussparung mit Führungsmitteln für die Positionierung der Kapsel 15 aufweist. Auf der zur Öffnung gegenüberliegenden Seite weist die Kapsel 15 einen Boden 18 auf, an dem Markierungen zur Identifizierung der Kapsel 15 angeordnet sind. Solche Markierungen können als Farbcodierung, optische Codierung, elektromagnetische Codierung oder sonst wie ausgebildet sein, um in einer vorbestimmten Position einen bestimmten Kapseltyp zu identifizieren. Durch ein Auslesen der Codierung der Kapsel 15 an der Vorrichtung kann über eine Steuerung die Füllmenge an heißem Wasser für die Brühkammer 6, die Temperatur und die Verweilzeit eingestellt werden. Auch die Steuerung anderer Parameter über die Codierung ist möglich.

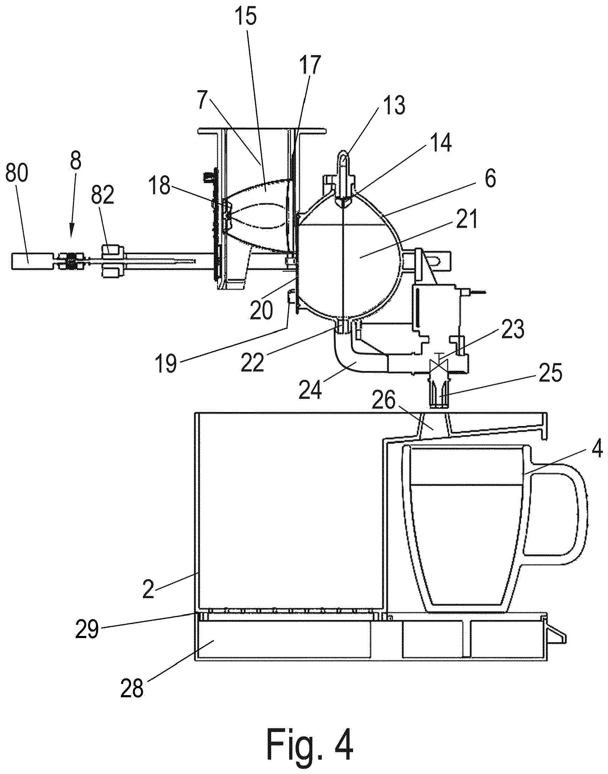

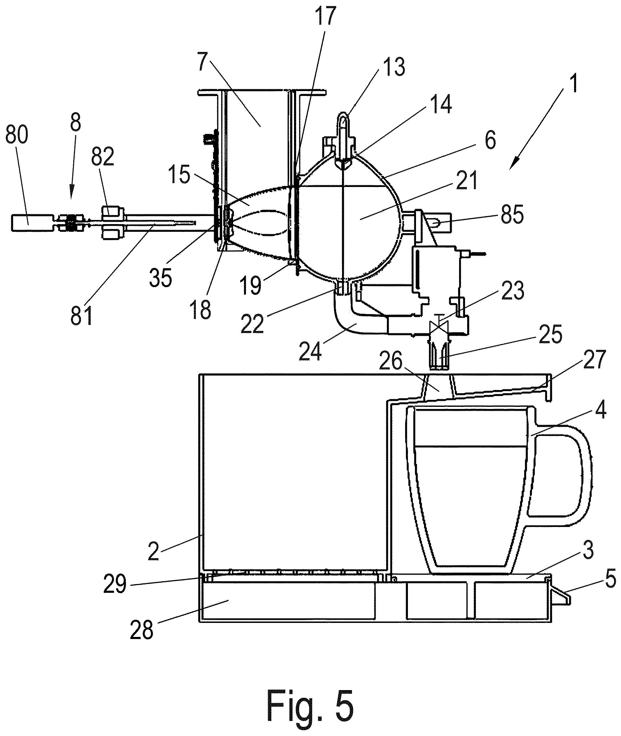

Für den Brühvorgang wird die Kapsel 15 zunächst in den Einwurfschacht 7 eingefügt, wie dies in Figur 4 gezeigt ist. Die Kapsel 15 gleitet nach unten, bis sie an einer seitlichen Öffnung 20 der Brühkammer 6 angeordnet ist. Hierfür sind an der Außenseite der Brühkammer 6 Halter 19 vorgesehen, die verhindern, dass die Kapsel 15 über die in Figur 5 gezeigte Position nach unten herausrutscht. In Figur 5 ist die Brühposition gezeigt, in die die Brühkammer 6 nach dem Einwerfen der Kapsel 15 verfahren wird. Hierfür wird über den Elektromotor 80 die Spindel 81 gedreht, um die Arme 83 entlang der Führung 85 in Figur 5 nach links zu verfahren, und um somit eine Dichtung benachbart zu der Öffnung 20 an der Brühkammer 6 gegen den Rand 16 der Kapsel 15 zu drücken und für eine Abdichtung zu sorgen. Die Kapsel 15 und ein Innenraum 21 der Brühkammer 6 bilden somit eine Einheit, wobei der Innenraum 21 der Brühkammer 6 und das Innere der Kapsel 15 durch das Sieb 31 voneinander getrennt sind. Der Innenraum 21 der Brühkammer 6 ist dabei ein Vielfaches größer als ein Innenraum der Kapsel 15, beispielsweise um mehr als vier mal so groß, so dass das Brühgetränk sich vorwiegend in der Brühkammer 6 befindet und nur ein kleinerer Teil in der Kapsel 15, was das Ausgeben des Brühgetränkes vereinfacht.

In der Brühposition wird nun über die Einlassleitung 13 heißes Wasser aus der Heizeinrichtung 11 in die Brühkammer 6 eingeleitet, wobei hierfür am Ende der Einlassleitung 13 eine Düse 14 vorgesehen ist, die mit einer Spitze in den Innenraum 21 der Brühkammer 6 hervorsteht. Die Brühkammer 6 weist am unteren Ende einen Auslass 22 auf, der über eine Leitung 24 mit einem Ventil 23 verbunden ist. Durch Schließen des Ventils 23 wird das eingeleitete heiße Wasser in der Brühkammer 6 gesammelt und steigt über den Auslass 22 an, um das in der Kapsel 15 enthaltene Material zum Brühen eines Getränkes, insbesondere Tee, zu erreichen. Durch ein vorheriges Auslesen der Codierung an der Kapsel 15 durch ein Lesegerät 35 kann über die Steuerung die Zubereitung des Brühgetränkes individuell angepasst werden, beispielsweise kann grüner Tee anders zubereitet werden als schwarzer Tee, Früchtetee oder ein anderes Brüh- oder Aufgussgetränk. Zudem kann über das Auslesen der Codierung ein Reinigungsprogramm oder ein Serviceprogramm gestartet werden.

Nach dem Brühvorgang kann das Ventil 23 geöffnet werden, damit das Brühgetränk aus der Brühkammer 6 über den Auslass 22, die Leitung 24 in einen Auslassstutzen 25 strömt, von dem es in ein Gefäß 4 eingeleitet wird. Zwischen dem Auslassstutzen 25 und dem Gefäß 4 befindet sich eine Durchführung 26 bzw. eine Öffnung, so dass das heiße Getränk ungehindert in das Gefäß 4 einströmen kann. Nach der Zubereitung des Brühgetränks kann das Ventil 23 wieder geschlossen werden.

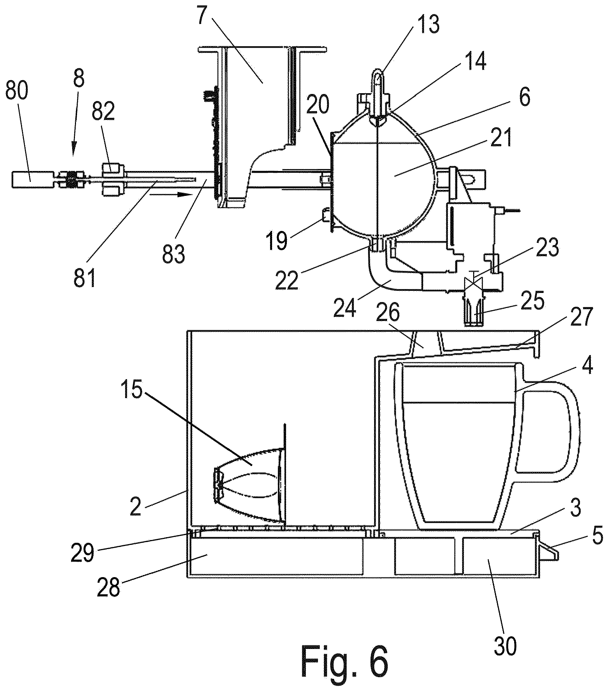

Nach dem Brühvorgang kann die Brühkammer 6 über die Antriebseinrichtung 8 entsprechend dem Pfeil in Figur 6 verfahren werden, so dass die Kapsel 15 aus der Halteposition benachbart zu der seitlichen Öffnung 20 an der Brühkammer 6 entfernt wird und nach unten herabfällt. Die Kapsel 15 fällt dabei in den Sammelbehälter 2 auf ein Sieb 29 oder ein Gitter, das oberhalb eines Sammelbeckens 28 angeordnet ist. Durch das Verfahren der Brühkammer 6 werden gleichzeitig auch die Leitung 24 und der Auslassstutzen 25 verfahren, der nun nicht mehr über der Durchführung 26, sondern über einem Leitelement 27 angeordnet ist. Nun kann die Brühkammer 6 gespült werden, indem heißes Wasser aus der Heizeinrichtung 11 über die Düse 14 in die Brühkammer 6 eingespritzt wird, so dass das heiße Wasser Rückstände des Brühvorganges entfernen kann. Das heiße Wasser kann dabei teilweise durch die Öffnung 20 in den Sammelbehälter 2 direkt eingeleitet werden und wird ansonsten über den Auslass 22 und die Leitung 24 in den Auslassstutzen 25 eingeleitet. Von dort gelangt das Spülwasser auf das Leitelement 27, das als schräger Boden oberhalb des Gefäßes 4 ausgebildet ist. Über das Leitelement 27 gelangt das Spülwasser in das Sammelbecken 28 des Sammelbehälters 2. Das Leitelement 27 kann statt als schräger Boden auch als Kanal oder Rinne ausgebildet sein.

Wird nach der Entnahme des Gefäßes 4 eine geringe Menge an Flüssigkeit durch den Durchlass 26 eingeleitet, kann diese Flüssigkeit in einem zweiten Sammelbecken 30 oder einer Tropfschale unterhalb des Siebes 31 gesammelt werden. Der Sammelbehälter 2 kann als Einheit aus dem Gehäuse 50 der Vorrichtung 1 entnommen werden, so dass die beiden Sammelbecken 28 und 30 an dem Sammelbehälter 2 entleert werden können. Zudem ist der Sammelbehälter 2 oberhalb des Siebes 29 abnehmbar, so dass auf einfache Weise auch die benutzten Kapseln 15 entleert werden können.

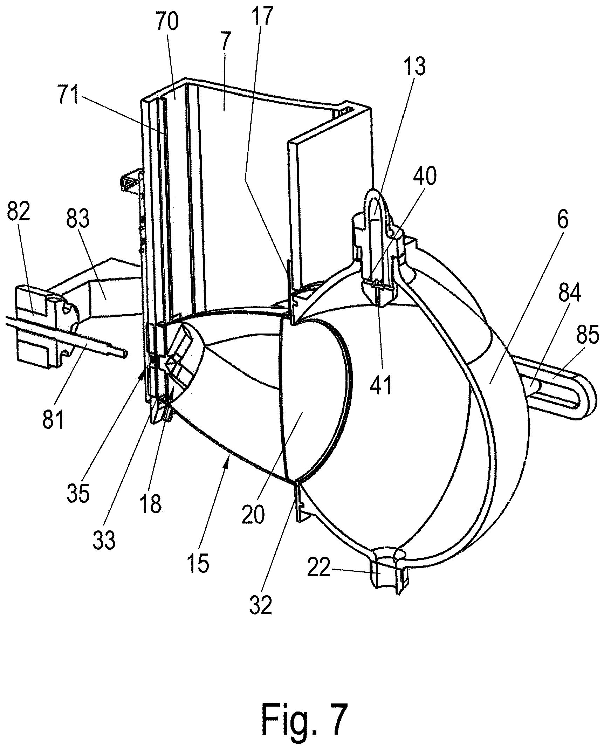

In Figur 7 ist die Brühkammer 6 im Detail dargestellt. An der Oberseite der Brühkammer 6 befindet sich die Düse 14, mittels der heißes Wasser für den Brühvorgang oder für den Spülvorgang eingeleitet wird. Die Düse 14 weist hierfür über den Umfang verteilt mehrere Öffnungen 40 auf, durch die das heiße Wasser in die Brühkammer 6 eingespritzt werden kann. Dadurch wird an den Seitenwänden der Brühkammer 6 ein Flüssigkeitsfilm gebildet, der einerseits zum Spülen und andererseits für den Brühvorgang genutzt werden kann. Zudem ist eine Öffnung 41 nach unten an der Düse 14 vorgesehen, durch die heißes Wasser eingespritzt werden kann, beispielsweise wenn heißes Wasser während des Brühvorganges nachgefüllt werden soll. Die Öffnungen 40 und 41 können dabei optional über Ventile schaltbar ausgebildet sein. Alternativ kann die Öffnung 41 auch nicht senkrecht nach unten, sondern in Richtung der Kapsel ausgeführt sein.

Die Brühkammer 6 ist im Wesentlichen kugelförmig ausgebildet und weist im oberen Bereich einen parabelförmigen Abschnitt auf, an dem die Düse 14 vorgesehen ist.

Die Brühkammer 6 besitzt an der Außenseite dabei Halter 84 oder Zapfen, die in der Führung 85 gelagert sind.

Die Brühkammer 6 kann ein Volumen zwischen 0,1 bis 1,0 I, insbesondere 0,15 I bis 0,7 I, aufnehmen, je nachdem, wie viele Portionen des Brühgetränks auf einmal zubereitet werden sollen.

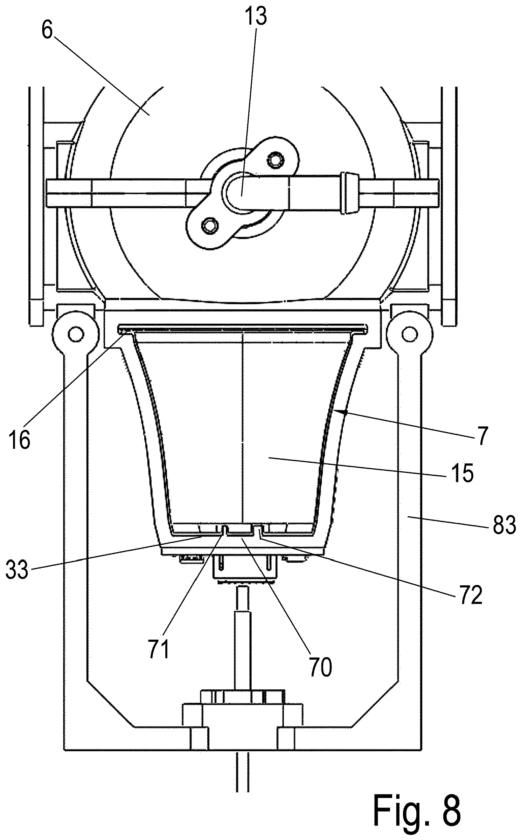

Ferner ist in den Figuren 7 und 8 zu sehen, dass der Einwurfschacht 7 auf der Seite des Bodens 18 der Kapsel 15 eine Fläche 70 aufweist, von der eine erste Führungsleiste 71 und eine zweite Führungsleiste 72 hervorstehen. Die Führungsleisten 71 und 72 weisen eine unterschiedliche Breite auf und sind zu einer Mittelebene der Kapsel 15 asymmetrisch ausgebildet, so dass die Kapsel 15 nur in einer vorbestimmten Position in den Einwurfschacht 7 eingeworfen werden kann.

Auf der Höhe der seitlichen Öffnung 20 ist benachbart zu dem Boden 18 der Kapsel 15 eine Bodenfläche 33 mit Nuten zur Aufnahme der Führungsleisten 71 und 72 vorgesehen, an der die Kapsel 15 nach dem Einwerfen abgestützt ist, wenn die Kapsel 15 an den Positionierungsmitteln 19 anliegt. In der Einwurfposition und der Brühposition wird somit verhindert, dass die Kapsel 15 in dem Einwurfschacht 7 herunterfallen kann. Wird die Brühkammer 6 nach dem Brühvorgang verfahren und von dem Einwurfschacht 7 entfernt, kann die Kapsel aufgrund der Schwerkraft nach unten in den Sammelbehälter 2 fallen. Hierbei kann es passieren, dass die Kapsel 15 mit dem Rand 16 an einer ringförmigen Dichtung 32 an der Brühkammer 6 anhaftet und mit der Brühkammer 6 gemeinsam verfahren wird. Damit eine Ablösung der Kapsel 15 sicher gewährleistet wird, kann in dem Verfahrweg der Kapsel ein Anschlag angeordnet sein, beispielsweise an dem nach oben ragenden Abschnitt 17, so dass die Kapsel 15 von der Brühkammer 6 nach einem bestimmten Verfahrweg gelöst wird und sichergestellt ist, dass die Kapsel 15 in den Sammelbehälter 2 herabfällt.

Durch die elektrische Antriebseinrichtung 8 ist sichergestellt, dass die Kapsel 15 automatisch ausgeworfen werden kann. Dadurch kann nach jedem Brühvorgang ein Spülvorgang eingeleitet werden, so dass verhindert wird, dass die Oberfläche der Brühkammer 6, des Auslasses 22 und der Leitung 24 verschmutzt. Das Spülen kann automatisch innerhalb von beispielsweise 30 Sekunden nach dem Brühvorgang durchgeführt werden, ohne dass der Benutzer den Spülvorgang auslösen muss.

Statt der gezeigten Antriebseinrichtung 8 mit der Spindel 81 können auch andere Antriebseinrichtungen eingesetzt werden, die die Brühkammer 6 linear bewegen oder auch verschwenken. Die Brühkammer 6 kann beispielsweise auch entlang einer Kurvenführung bewegt werden, um zwischen einer Einwurfposition, einer Brühposition und einer Auswurf- oder Spülposition bewegt zu werden.

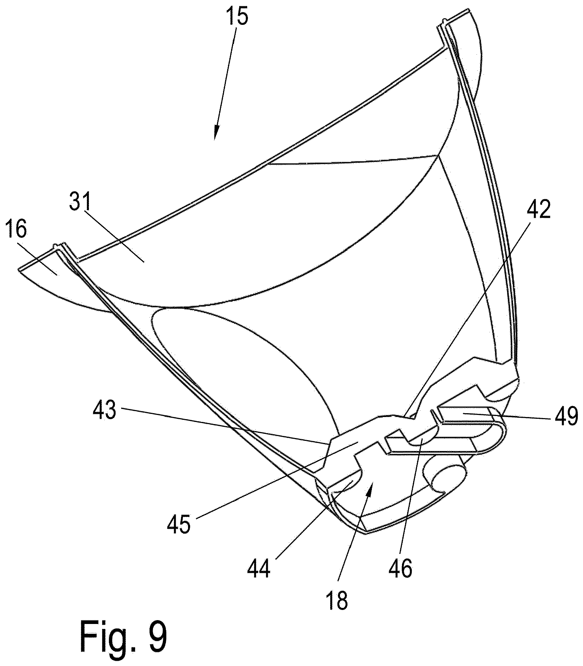

Die Kapsel 15 ist in Figur 9 im Schnitt gezeigt. Sie weist einen Innenraum auf, der über ein Sieb 31 oder ein Gitter verschlossen ist. Um das Aroma des Inhalts der Kapsel länger zu erhalten, kann das Sieb 31 oder das Gitter mit einer Abdeckfolie verschlossen sein, die dann vor dem Einwerfen in den Einwurfschacht 7 ganz oder teilweise entfernt wird. An dem gegenüberliegend angeordneten Boden 18 ist mindestens eine Einkoppelfläche 46, mindestens eine Lichtumlenkvorrichtungen 42 und 43 sowie mindestens eine Auskoppelfläche 44 vorgesehen, die für ein optisches Erkennungssystem eingesetzt werden. An dem Boden 18 sind hierfür Lichtleiter 45 ausgebildet. Ferner ist am Boden ein hervorstehendes Führungsprofil 49 ausgebildet, die mit den Führungsleisten 71 und 72 zusammenwirkt. In dem dargestellten Ausführungsbeispiel sind vier Auskoppelflächen 44 vorgesehen, an denen jeweils ein Lichtdetektor das Emittieren von Licht erfasst oder auch nicht erfasst. Dadurch ergeben sich am Boden 18 der Kapsel 15 vier Codierungen, so dass 16 unterschiedliche Kapseltypen erkannt werden können. Es ist natürlich auch möglich, die Anzahl der Auskoppelflächen 44 und Lichtdetektoren 36 zu variieren. Es ist auch möglich, die Lichtquellen und Lichtsensoren anders anzuordnen, so dass beispielsweise die Auskoppelflächen 44 zu Einkoppelflächen und die mittige Einkoppelfläche 46 zu einer Auskoppelfläche wird.

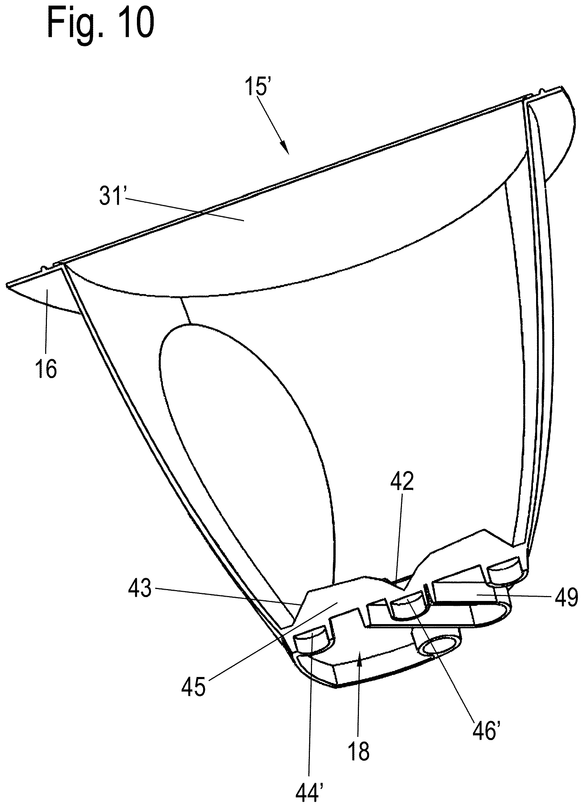

In Figur 10 ist eine gegenüber Figur 9 modifizierte Ausführungsform einer Kapsel 15' gezeigt. Die Kapsel 15' weist am Boden vier Auskoppelflächen 44' und eine Einkoppelfläche 46' auf, die jeweils in einer tassenförmigen Aufnahme geschützt angeordnet sind. Die parallel zur Fläche des Bodens 18 ausgerichteten Aus- und Einkoppelflächen 44' und 46' sind somit durch einen nach unten hervorstehenden Ring geschützt angeordnet. Ferner ist ein Sieb 31' an dem oberen Rand 16 der Kapsel 15' fixiert.

In dem dargestellten Ausführungsbeispiel ist die Brühkammer 6 einwandig ausgebildet, beispielsweise aus Kunststoff, Metall oder Glas. Es ist aber auch möglich, die Brühkammer 6 zur Erhöhung der Temperaturbeständigkeit zu isolieren, beispielsweise mit einer Umhüllung aus Isoliermaterial oder durch eine doppelwandige Ausbildung. Dann kann das Brühgetränk auch bei langen Ziehzeiten von beispielsweise über 5 Minuten ausreichend temperiert ausgegeben werden.

### Bezugszeichenliste

- 1: Vorrichtung
- 2: Sammelbehälter
- 3: Auflage
- 4: Gefäß
- 5: Griffabschnitt
- 6: Brühkammer
- 7: Einwurfschacht
- 8: Antriebseinrichtung
- 9: Tank
- 10: Pumpe
- 11: Heizeinrichtung
- 12: Leitung
- 13: Einlassleitung
- 14: Düse
- 15: Kapsel
- 16: Rand
- 17: Abschnitt
- 18: Boden
- 19: Halter
- 20: Öffnung
- 21: Innenraum
- 22: Auslass
- 23: Ventil
- 24: Leitung
- 25: Auslassstutzen
- 26: Durchführung
- 27: Leitelement
- 28: Sammelbecken
- 29: Sieb
- 30: Sammelbecken
- 31: Sieb
- 32: Dichtung
- 33: Vorsprung
- 35: Lesegerät
- 40: Öffnung
- 41: Öffnung
- 42: Lichtumlenkvorrichtung
- 43: Lichtumlenkvorrichtung
- 44: Einkoppelfläche
- 45: Lichtleiter
- 46: Auskoppelfläche
- 49: Führungsprofil
- 50: Gehäuse
- 70: Fläche
- 71: Führungsleiste
- 72: Führungsleiste
- 80: Elektromotor
- 81: Spindel
- 82: Spindelmutter
- 83: Arm
- 84: Halter
- 85: Führung

## Patentansprüche

1. Vorrichtung zur Zubereitung eines Brühgetränks, umfassend:
a) eine Einrichtung (10, 11) zum Erhitzen und Fördern von Wasser;
b) eine Brühkammer (6), in die das erhitzte Wasser eingeleitet wird;
c) eine Positioniereinrichtung (19) zum nebengeordneten Positionieren einer Kapsel (15) an der Brühkammer mit einem Inhaltsstoff zum Brühen des Getränks an einer seitlichen Öffnung der Brühkammer (6), und
d) einen Auslass (22) mit einem schaltbaren Ventil (23) an einer Unterseite der Brühkammer (6),
**dadurch gekennzeichnet,**
**dass** an einer Oberseite der Brühkammer (6) ein Einlass zum Einleiten des heißen Wassers vorgesehen ist.

2. Vorrichtung nach Anspruch 1, **dadurch gekennzeichnet, dass** das Volumen der Brühkammer (6) mindestens doppelt so groß ist wie das Volumen der Kapsel (15), vorzugsweise mindestens viermal so groß.

3. Vorrichtung nach Anspruch 1 oder 2, **dadurch gekennzeichnet, dass** zwischen einem Innenraum (21) der Brühkammer (6) und der Kapsel (15) ein Sieb (31) angeordnet ist.

4. Vorrichtung nach einem der vorhergehenden Ansprüche, **dadurch gekennzeichnet, dass** an dem Einlass an der Oberseite der Brühkammer (6) eine Düse (14) mit mehreren über den Umfang verteilten Öffnungen (40) vorgesehen ist.

5. Vorrichtung nach Anspruch 4, **dadurch gekennzeichnet, dass** die Düse (14) mit einer Spitze in einen Innenraum (21) der Brühkammer (6) hervorsteht.

6. Vorrichtung nach einem der vorhergehenden Ansprüche, **dadurch gekennzeichnet, dass** eine Antriebseinrichtung (8) vorgesehen ist, mittels der die Brühkammer (6) bewegbar ist.

7. Vorrichtung nach einem der vorhergehenden Ansprüche, **dadurch gekennzeichnet, dass** ein Einfüllstutzen (25) in einer Brühposition oberhalb einer Durchführung (26) zum Befüllen des Gefäßes (4) angeordnet ist und in einer Spülposition beabstandet von der Durchführung (26) oberhalb eines Leitelementes (27) zum Sammeln der Spülflüssigkeit.

8. Vorrichtung nach einem der vorhergehenden Ansprüche, **dadurch gekennzeichnet, dass** die seitliche Öffnung (20) der Brühkammer (6) oberhalb eines Sammelbehälters (2) angeordnet ist.

9. Vorrichtung nach Anspruch 8, **dadurch gekennzeichnet, dass** der Sammelbehälter (2) ein Gitter (29) oder Sieb aufweist, um gebrauchte Kapseln (15) oberhalb eines Sammelbeckens (28) für Flüssigkeit zu sammeln.

10. Verfahren zur Zubereitung eines Brühgetränks, mit den folgenden Schritten:
a) Positionieren einer Kapsel (15) mit einem Inhaltsstoff zum Brühen des Getränks an einer seitlichen Öffnung einer der Kapsel nebengeordneten Brühkammer (6);
b) Erhitzen und Fördern von Wasser zu der Brühkammer (6);
c) Einlass des erhitzten Wassers an einer Oberseite der Brühkammer (6);
d) Zubereiten des Getränks in der Brühkammer (6) unter Befüllung der Kapsel (15) mit dem erhitzten Wasser, und
e) Öffnen eines Ventils (23) nach einer Wartezeit, vorzugsweise nach mindestens 30 Sekunden, an der Unterseite der Brühkammer (6) an einem Auslass (22) und Befüllen eines Gefäßes (4) mit dem Brühgetränk.

11. Verfahren nach Anspruch 10, **dadurch gekennzeichnet, dass** nach dem Brühvorgang die Brühkammer (6) verfahren wird, um die Kapsel (15) in einem Sammelbehälter (2) abzuwerfen.

12. Verfahren nach Anspruch 10 oder 11, **dadurch gekennzeichnet, dass** nach dem Brühvorgang die Brühkammer (6) zusammen mit einem Einfüllstutzen (25) verfahren wird, um den Einfüllstutzen (25) von einer Einfüllposition oberhalb einer Durchführung (26) zum Befüllen des Gefäßes (4) in eine Spülposition oberhalb eines Leitelementes (27) zu bewegen und dann die Brühkammer (6) zu spülen.

13. Verfahren nach einem der Ansprüche 10 bis 12, **dadurch gekennzeichnet, dass** die Kapsel (15) eine Codierung oder Markierung aufweist, die nach der Positionierung der Kapsel (15) ausgelesen wird und dann eine Steuerung die Zubereitungsparameter entsprechend der Codierung oder Markierung steuert.

14. Verfahren nach einem der Ansprüche 10 bis 13, **dadurch gekennzeichnet, dass** in der Brühkammer (6) und der Kapsel (15) Tee gebrüht wird.

## Claims

1. An apparatus for preparing a brewed beverage, comprising:
a) a device (10, 11) for heating and conveying water;
b) a brewing chamber (6) into which the heated water is introduced;
c) a positioning device (19) for positioning a capsule (15) next to the brewing chamber with an ingredient for brewing a beverage at a lateral opening (20) of the brewing chamber (6), and
d) an outlet (22) with a switchable valve (23) on a bottom side of the brewing chamber (6);
**characterized in that** an inlet for introducing the hot water is provided on an upper side of the brewing chamber (6).

2. An apparatus according to claim 1, **characterized in that** the volume of the brewing chamber (6) is at least twice as large as the volume of the capsule (15), preferably at least four times as large.

3. An apparatus according to claim 1 or 2, **characterized in that** a screen (31) is arranged between an interior space (21) of the brewing chamber (6) and the capsule (15).

4. An apparatus according to one of the preceding claims, **characterized in that** a nozzle (14) with several openings (40) which are distributed over the circumference is provided on the inlet on the upper side of the brewing chamber (6).

5. An apparatus according to claim 4, **characterized in that** the nozzle (14) protrudes with a tip into an interior space (21) of the brewing chamber (6).

6. An apparatus according to one of the preceding claims, **characterized in that** a drive device (8) is provided, by means of which the brewing chamber (6) can be moved.

7. An apparatus according to one of the preceding claims, **characterized in that** a filler neck (25) is arranged in a brewing position above a passage (26) for filling the vessel (4) and in a rinsing position spaced from the passage (26) above a guide element (27) for collecting the rinsing liquid.

8. An apparatus according to one of the preceding claims, **characterized in that** the lateral opening (20) of the brewing chamber (6) is arranged above a collecting container (2).

9. An apparatus according to claim 8, **characterized in that** the collecting container (2) comprises a grate (29) or screen in order to collect used capsules (15) above a collecting basin (28) for liquid.

10. A method for preparing a brewed beverage, comprising the following steps:
a) positioning a capsule (15) with an ingredient for brewing the beverage at a lateral opening (20) of a brewing chamber (6) located next to the capsule;
b) heating and conveying water to the brewing chamber (6);
c) introduction of the heated water on an upper side of the brewing chamber (6);
d) preparation of the beverage in the brewing chamber (6) by filling the capsule (15) with heated water, and
e) opening of a valve (23) after a brewing time, preferably after at least 30 seconds, on the bottom side of the brewing chamber (6) on an outlet (22) and filling of a vessel (4) with the brewed beverage.

11. A method according to claim 10, **characterized in that** after the brewing process the brewing chamber (6) is moved in order to eject the capsule (15) to a collecting container (2).

12. A method according to claim 10 or 11, **characterized in that** after the brewing process the brewing chamber (6) is displaced together with a filler neck (25) in order to move the filler neck (25) from a filling position above a passage (26) for filling the vessel (4) to a rinsing position above a guide element (27) and to then rinse the brewing chamber (6).

13. A method according to one of the claims 10 to 12, **characterized in that** the capsule (15) comprises a coating or marking which is read after the positioning of the capsule (15), and a controller then controls the preparation parameters according to the coding or marking.

14. A method according to one of the claims 10 to 13, **characterized in that** tea is brewed in the brewing chamber (6) and capsule (15).

## Revendications

1. Dispositif de préparation d'une boisson infusée comprenant :
a) une installation (10, 11) permettant de chauffer et de fournir de l'eau,
b) une chambre d'infusion (6) dans laquelle l'eau chauffée est transférée,
c) une installation de positionnement (19) permettant de positionner au voisinage de la chambre d'infusion une capsule (15) renfermant une substance permettant de faire infuser la boisson, sur une ouverture latérale de la chambre d'infusion (6), et
d) une sortie (22) équipée d'une soupape commutable située sur le côté inférieur (23) de la chambre d'infusion (6),
**caractérisé en ce que**
sur le côté supérieur de la chambre d'infusion (6) il est prévu une entrée d'introduction de l'eau chaude.

2. Dispositif conforme à la revendication 1,
**caractérisé en ce que**
le volume de la chambre d'infusion (6) est égal au moins au double du volume de la capsule (15), et de préférence à au moins quatre fois ce volume.

3. Dispositif conforme à la revendication 1 ou 2,
**caractérisé en ce qu'**
un tamis (31) est monté entre le volume interne (21) de la chambre d'infusion (6) et la capsule (15).

4. Dispositif conforme à l'une des revendications précédentes,
**caractérisé en ce qu'**
il est prévu sur l'entrée située sur le côté supérieur de la chambre d'infusion (6) une buse (14) équipée de plusieurs ouvertures (40) réparties sur sa périphérie.

5. Dispositif conforme à la revendication 4,
**caractérisé en ce que** la buse (14) pénètre dans le volume interne (21) de la chambre d'infusion (6) par une pointe.

6. Dispositif conforme à l'une des revendications précédentes,
**caractérisé en ce qu'**
il est prévu un dispositif d'entraînement (8) permettant de déplacer la chambre d'infusion (6).

7. Dispositif conforme à l'une des revendications précédentes,
**caractérisé en ce qu'**
un embout de remplissage (25) est positionné au-dessus d'un passage (26) permettant de remplir un récipient (4) dans une position d'infusion, et au-dessus d'un élément de guidage (27) permettant de recueillir un liquide de lavage à distance du passage (26) dans une position de lavage.

8. Dispositif conforme à l'une des revendications précédentes,
**caractérisé en ce que**
l'ouverture latérale (20) de la chambre d'infusion (6) est située au-dessus d'un réceptacle de collecte (2).

9. Dispositif conforme à la revendication 8,
**caractérisé en ce que**
le réceptacle de collecte (2) comporte une grille (29) ou un tamis permettant de collecter des capsules (15) utilisées au-dessus d'un bac de collecte (28) du liquide.

10. Procédé de préparation d'une boisson infusée comprenant les étapes suivantes consistant à :
a) positionner une capsule (15) renfermant une substance permettant de faire infuser la boisson sur une ouverture latérale d'une chambre d'infusion (6) voisine de la capsule,
b) chauffer et transférer de l'eau dans la chambre d'infusion (6),
c) introduire l'eau chaude sur le côté supérieur de la chambre d'infusion (6),
d) préparer la boisson dans la chambre d'infusion (6) en remplissant la capsule (15) avec l'eau chaude, et
e) après un temps d'attente, de préférence après au moins 30 secondes, ouvrir une soupape (23), située sur le côté inférieur de la chambre d'infusion (6) sur une sortie (22) et remplir un récipient (4) avec la boisson infusée.

11. Procédé conforme à l'une des revendications précédentes,
**caractérisé en ce qu'**après le processus d'infusion, la chambre d'infusion (6) est déplacée pour permettre d'évacuer la capsule (15) dans un réceptacle de collecte (2).

12. Procédé conforme à la revendication 10 ou 11,
**caractérisé en ce qu'**
après le processus d'infusion, la chambre d'infusion (6) est déplacée avec l'embout de remplissage (25), pour déplacer l'embout de remplissage (25) d'une position de remplissage située au-dessus d'une ouverture de passage (26) permettant de remplir le récipient (4) dans une position de lavage située au-dessus d'un élément de guidage (27) et laver la chambre d'infusion (6).

13. Procédé conforme à l'une des revendications 10 à 12,
**caractérisé en ce que**
la capsule (15) comporte un codage ou un marquage qui est lu après le positionnement de la capsule (15), puis, une commande commande les paramètres de préparation conformément au codage ou au marquage.

14. Dispositif conforme à l'une des revendications 10 à 13,
**caractérisé en ce que**
du thé est infusé dans la chambre d'infusion (6) et la capsule (15).
